# EUROPÄISCHE PATENTANMELDUNG

(11) **EP 4 663 989 A1**
(43) Veröffentlichungstag der Anmeldung: **17.12.2025**
(21) Anmeldenummer: 25178361.9
(22) Anmeldetag: 22.05.2025
(51) Int. Cl.: F16K 31/385, F16K 31/524

(54) **SANITÄRVENTIL MIT PILOTVENTIL**

(30) Priorität: 13.06.2024 DE 102024116695
(71) Anmelder: Neoperl GmbH, 79379 Müllheim (DE)
(72) Erfinder: Bian, Yichao, 79379 Müllheim (DE); Tempel, Marc, 79111 Freiburg (DE); Schürle, Holger, 79379 Müllheim (DE)
(74) Vertreter: Mertzlufft-Paufler, Cornelius

(57) **Zusammenfassung**

Es wird ein Sanitärventil (1) vorgeschlagen, mit einem Hauptventil (2), das ein bewegliches Schaltelement (3) aufweist, und mit einem Pilotventil (4), mit welchem das Hauptventil (2) zwischen einer Schließstellung, in der das Schaltelement (3) auf einem Ventilsitz (5) des Hauptventils (2) dicht aufliegt, und einer Offenstellung ansteuerbar ist, in der das Schaltelement (3) zu dem Ventilsitz (5) beabstandet ist, wobei das Pilotventil (4) mit einem Ventilstößel (6) zwischen einer Schließstellung und einer Offenstellung ansteuerbar ist, wobei der Ventilstößel (6) in seiner Schließstellung mit einem Aufsetzbereich (7) auf einem Pilotventilsitz (8) des Schaltelements (3) aufsitzt, wobei zumindest der Aufsetzbereich (7) eine größere Härte als der Pilotventilsitz (8) aufweist. Ferner wird eine Sanitärarmatur mit einem erfindungsgemäßen Sanitärventil (1) vorgeschlagen.

## Beschreibung

Die Erfindung betrifft ein Sanitärventil.

Die Erfindung betrifft weiter eine Sanitärarmatur mit einem erfindungsgemäßen Sanitärventil.

Das Sanitärventil umfasst ein Hauptventil, das ein bewegliches Schaltelement aufweist, und ein Pilotventil, mit welchem das Hauptventil zwischen einer Schließstellung, in der das Schaltelement auf einem Ventilsitz des Hauptventils dicht aufliegt, und einer Offenstellung ansteuerbar ist, in der das Schaltelement zu dem Ventilsitz beabstandet ist und wobei das Pilotventil mit einem Ventilstößel zwischen einer Schließstellung und einer Offenstellung ansteuerbar ist.

Derartige Sanitärventile sind bekannt.

Die Aufgabe der Erfindung besteht darin, die Herstellung derartiger Sanitärventile zu vereinfachen.

Zur Lösung der genannten Aufgabe sind erfindungsgemäß die Merkmale des Anspruchs 1 vorgesehen. Insbesondere wird somit zur Lösung der genannten Aufgabe bei Sanitärventilen der eingangs beschriebenen Art erfindungsgemäß vorgeschlagen, dass der Ventilstößel in seiner Schließstellung mit einem Aufsetzbereich auf einem Pilotventilsitz des Schaltelements aufsitzt, wobei zumindest der Aufsetzbereich eine größere Härte als der Pilotventilsitz aufweist.

Somit kann eine zuverlässige Abdichtung des Ventilstößels gegen das Schaltelement erreicht werden. Dadurch, dass der Aufsetzbereich eine größere Härte als der Pilotventilsitz aufweist, kann der Pilotventilsitz beim Aufsetzen des Ventilstößels nachgeben, um eine zuverlässige Abdichtung zu erzielen und eine in den Ventilstößel eingebrachte Stauchungskraft vermindern. Der Ventilstößel kann zumindest an seinem freien Ende dichtungsfrei ausgebildet werden.

Bei einer vorteilhaften Ausgestaltung kann vorgesehen sein, dass der Ventilstößel in seiner Schließstellung mit seinem Aufsetzbereich eine Entlastungsöffnung des Schaltelements verschließt.

Somit kann durch die Bewegung des Ventilstößels eine Offenstellung und eine Schließstellung des Pilotventils festlegbar sein. Ein in seiner Schließstellung in eine Entlastungsöffnung seines zugehörigen Schaltelements eintauchender Ventilstößel, wie er aus dem Stand der Technik bekannt ist, ist somit verzichtbar. Somit lassen sich Reibungskräfte zwischen dem Ventilstößel und dem Schaltelement während des Schaltvorgangs minimieren. Die Entstehung von Abrieb des Schaltelements während des Schaltvorgangs kann somit vermieden werden.

Zusätzlich kann vorgesehen sein, dass die Entlastungsöffnung an ihrem dem Ventilstößel zugewandten Ende einen geringsten Durchmesser aufweist.

Somit kann der in Richtung des Ventilstößels exponierte Abschluss der Entlastungsöffnung möglichst klein gewählt werden, so dass der Aufsetzbereich des Ventilstößels ebenfalls ausreichend klein gewählt werden kann. Die Handhabbarkeit des Sanitärventils lässt sich somit verbessern.

Alternativ oder zusätzlich kann vorgesehen sein, dass sich die Entlastungsöffnung in Schließrichtung des Schaltelements erweitert.

Somit kann ein Durchströmen von Wasser durch die Entlastungsöffnung während des Schaltvorgangs des Schaltelements vereinfacht werden.

Bei einer vorteilhaften Ausgestaltung kann vorgesehen sein, dass der Aufsetzbereich des Ventilstößels von einem Fortsatz des Ventilstößels gebildet ist. Der Fortsatz kann beispielsweise ringförmig sein.

Somit können der Ort und die Form der Abdichtung zwischen Ventilstößel und Schaltelement genauer definiert sein. Auf diese Weise ist eine besonders sichere Bedienung des Sanitärventils realisierbar.

Alternativ oder zusätzlich kann vorgesehen sein, dass der Aufsetzbereich des Ventilstößels eine Öffnung in ein Inneres des Ventilstößels umschließt.

Somit kann ein Inneres des Ventilstößels selbst dann mit einem auf der Gegenseite des Schaltelements befindlichen Bereich fluidisch verbunden bleiben, wenn der Ventilstößel und das Schaltelement in Schließstellung befindlich sind.

Bei einer vorteilhaften Ausgestaltung kann vorgesehen sein, dass der Ventilstößel aus einem homogenen Material gefertigt ist. Bei dem Material kann es sich beispielsweise um einen Kunststoff handeln.

An dem Ventilstößel angebrachte Dichtungen bzw. Dichtelemente können somit verzichtbar sein. Der Ventilstößel kann auf diese Weise besonders einfach und kostengünstig gefertigt werden.

Bei einer vorteilhaften Ausgestaltung kann vorgesehen sein, dass der Ventilstößel an seinem den Aufsetzbereich bildenden Ende eine umlaufende Werkzeugtrennlinie aufweist. Alternativ oder zusätzlich kann vorgesehen sein, dass der Ventilstößel zumindest an seinem dem Aufsetzbereich abgewandten Ende eine axial verlaufende Werkzeugtrennlinie aufweist.

Somit kann der Ventilstößel in einem Spritzgussverfahren herstellbar sein, wobei je nach Lage der Werkzeugtrennlinie Hinterschneidungen an den gewünschten Stellen ausbildbar sind.

Bei einer vorteilhaften Ausgestaltung kann vorgesehen sein, dass der Aufsetzbereich des Ventilstößels an einem freien Ende des Ventilstößels ausgebildet ist. Zusätzlich kann vorgesehen sein, dass das freie Ende mit einer Durchmesservergrößerung versehen ist.

Somit kann der Aufsetzbereich in exponierter Lage vorgesehen sein. Unterwünschte Berührungen des Ventilstößels während seines Schaltvorgangs sind somit vermeidbar. Der Ventilstößel kann so kompakt wie möglich hergestellt werden, wenn lediglich sein freies Ende mittels der Durchmesservergrößerung an die gewünschte Größe und/oder Form des Aufsetzbereiches angepasst ist.

Bei einer vorteilhaften Ausgestaltung kann vorgesehen sein, dass der Aufsetzbereich als ein Kragen ausgebildet ist.

Somit kann der Aufsetzbereich vergleichsweise klein ausgeführt sein, um eine während des Schaltvorgangs auf den Ventilstößel ausgeübte Kraft mittels einer möglichst kleinen Fläche und somit einem großen Druck in das Schaltelement einzuleiten. In Verbindung mit der größeren Härte des Aufsetzbereiches gegenüber dem Pilotventilsitz ergibt sich eine möglichst starke und sichere Abdichtung.

Zusätzlich kann vorgesehen sein, dass der Kragen umlaufend ausgebildet ist. Alternativ oder zusätzlich kann vorgesehen sein, dass der Kragen angeformt ist.

Die Form des Aufsetzbereiches kann somit vorteilhaft gewählt und genauer definiert werden. Eine Anformung des Kragens stellt sicher, dass sich der Kragen im Laufe der Einsatzzeit des Sanitärventils nicht löst.

Bei einer vorteilhaften Ausgestaltung kann vorgesehen sein, dass das Schaltelement einstückig ausgebildet ist.

Das Schaltelement ist somit auf einfache Weise herstellbar. Das Schaltelement kann aus nur einem Material gefertigt sein, um die Produktion zu vereinfachen und die Haltbarkeit und Zuverlässigkeit des Schaltelements gegenüber mehrteiligen Schaltelementen zu erhöhen. Es ist auch möglich, dass das Schaltelement aus beispielsweise unterschiedlich harten Werkstoffen, jedoch insgesamt einstückig hergestellt ist. Das Schaltelement kann beispielsweise in einem Spritzgussverfahren gefertigt sein.

Alternativ oder zusätzlich kann vorgesehen sein, dass das Schaltelement aus einem homogenen Werkstoff ausgebildet ist.

Somit können gleiche stoffliche Eigenschaften über das gesamte Schaltelement gewährleistet werden. Ein aus einem homogenen Werkstoff ausgebildetes Schaltelement kann beispielsweise aus einem weichen Material bestehen.

Zusätzlich kann vorgesehen sein, dass das Schaltelement aus Gummi ausgebildet ist.

Bei dem homogenen Werkstoff handelt es sich somit in diesem Fall um Gummi. Somit kann das Schaltelement eine gewünschte Elastizität und Stabilität aufweisen. Anstelle von Gummi können auch andere elastische Werkstoffe verwendet werden. Das Schaltelement kann somit auf einfache Weise beispielsweise mittels eines (Spritz-)Gussverfahrens hergestellt werden.

Bei einer vorteilhaften Ausgestaltung kann vorgesehen sein, dass das Schaltelement aus wenigstens zwei miteinander verbundenen Komponenten ausgebildet ist.

Bei den Komponenten kann es sich beispielsweise um abgrenzbare Bereiche unterschiedlicher Materialzusammensetzung des Schaltelements handeln. Somit lassen sich unterschiedliche Bereiche des Schaltelements mit unterschiedlichen stofflichen Eigenschaften versehen. Beispielsweise können unterschiedliche Bereiche des Schaltelements eine voneinander verschiedene Härte aufweisen. So kann das Schaltelement beispielsweise aus einer weichen und einer harten Komponente bestehen. Die Komponenten können unterschiedliche Bereiche des Schaltelements ausbilden. Das Schaltelement kann beispielsweise im Zwei-Komponenten-Spritzguss gefertigt sein. Hierbei kann beispielsweise zunächst ein Grundkörper des Schaltelements aus einem harten Material hergestellt werden, wonach der Pilotventilsitz aus einem weichen Material hinzugefügt wird.

Zusätzlich kann vorgesehen sein, dass die wenigstens zwei Komponenten stoffschlüssig miteinander verbunden sind.

Somit kann das Schaltelement einstückig ausgeführt werden, um seine Stabilität und Haltbarkeit zu optimieren.

Bei einer vorteilhaften Ausgestaltung kann vorgesehen sein, dass das Schaltelement von einer Befüllöffnung durchsetzt ist, mittels welcher ein pilotventilseitig befindlicher Bereich des Sanitärventils bei in Schließstellung befindlichem Hauptventil befüllbar ist.

Somit kann in dem in Bezug auf das Schaltelement pilotventilseitig befindlichen Bereich, der als Druckkammer bezeichnet werden könnte, ein Wasserdruck aufgebaut werden, der das Hauptventil geschlossen hält, bis die Entlastungsöffnung durch Bewegen des Ventilstößels freigegeben wird.

Zusätzlich kann vorgesehen sein, dass das Schaltelement außerhalb des Pilotventilsitzes von der Befüllöffnung durchsetzt ist.

Die Position der Befüllöffnung kann somit genauer vorgegeben sein. Die Befüllöffnung kann in Bezug auf andere Bauteile des Ventils und/oder in einem Abschnitt geringerer Materialdicke des Schaltelements vorteilhaft angeordnet sein.

Alternativ oder zusätzlich kann vorgesehen sein, dass ein Durchmesser der Befüllöffnung durch ein Reduzierelement verengt ist.

Somit kann ein Durchmesser der Befüllöffnung genauer festlegbar sein. Somit kann auch ein die Befüllöffnung passierender Volumenstrom und eine Befülldauer des zu befüllenden Bereichs festlegbar sein.

Bei dem Reduzierelement kann es sich um eine Feder handeln.

Hierbei kann auch lediglich ein gerade verlaufender Abschnitt der Feder die Befüllöffnung verengen. Das Reduzierelement kann die Befüllöffnung somit durchsetzen und/oder relativ zu dem Gehäuse in einer feststehenden Lage befindlich sein. Somit kommt es während der Schaltvorgänge zu einer Relativbewegung zwischen Befüllöffnung und Reduzierelement, wodurch eine Reinigungsfunktion gegeben ist, die ein Zusetzen der Befüllöffnung vermeiden kann. Besonders vorteilhaft ist es, wenn das Reduzierelement, inbsbesondere die Feder, durch eine harte Komponente des Schaltelements geführt ist, die Befüllöffnung also innerhalb einer haten Komponente des Schaltelements ausgebildet ist. Somit kann ein Verschleiß der Befüllöffnung verringert werden.

Bei einer vorteilhaften Ausgestaltung kann vorgesehen sein, dass das Schaltelement im Bereich der Befüllöffnung durch Verstärkungsstrukturen verstärkt ist.

Somit kann das Schaltelement genau dort stabiler ausgeführt werden, wo es regelmäßig durch die Schaltvorgänge des Ventilstößels beansprucht wird. Ein Widerstand des Schaltelements gegen den anliegenden Ventilstößel kann somit genau so festgelegt sein, dass eine optimale Abdichtung zwischen dem Aufsetzbereich und dem Schaltelement erreicht wird.

Alternativ oder zusätzlich kann vorgesehen sein, dass das Schaltelement im Bereich der Befüllöffnung durch eine harte Komponente verstärkt ist.

Hierbei handelt es sich um die oder eine härtere Komponente der Komponenten, aus denen das Schaltelement besteht. Auch auf diese Weise kann die Stabilität des Schaltelements und/oder einem von diesen gegen den Ventilstößel ausgeübter Widerstand optimiert werden.

Bei einer vorteilhaften Ausgestaltung kann vorgesehen sein, dass das Schaltelement einen Faltabschnitt aufweist, der eine Schaltbewegung zwischen der Offenstellung und der Schließstellung des Hauptventils ermöglicht.

Somit kann ein Bereich des Schaltelements festgelegt sein, mittels welchem die Schaltbewegung des Schaltelements ermöglicht wird. Der Faltabschnitt kann beispielsweise an den Pilotventilsitz anschließen und/oder von diesem beabstandet sein.

Zusätzlich kann vorgesehen sein, dass der Faltabschnitt ringförmig umlaufend ausgeführt ist.

Somit kann der Faltabschnitt den Pilotventilsitz direkt oder mit Abstand umschließen.

Alternativ oder zusätzlich kann vorgesehen sein, dass das Schaltelement in einem Bereich des Pilotventilsitzes eine größere, insbesondere mehrfach größere, Materialstärke aufweist als im Faltabschnitt.

Somit kann einerseits eine besonders sichere Abdichtung am Pilotventilsitz und andererseits eine ausreichende Beweglichkeit im Bereich des Faltabschnitts realisiert werden.

Alternativ oder zusätzlich kann vorgesehen sein, dass das Schaltelement an der oder einer Befüllöffnung eine geringere, insbesondere mehrfach geringere, Materialstärke als im Bereich des Pilotventilsitzes hat.

Somit kann eine Tiefe der Befüllöffnung kleingehalten werden, während die Dichtheit im Bereich des Pilotventilsitzes unbeeinflusst bleibt. Bei der Befüllöffnung kann es sich insbesondere um die bereits beschriebene Befüllöffnung handeln.

Alternativ oder zusätzlich kann vorgesehen sein, dass das Schaltelement an der oder einer Befüllöffnung eine größere, insbesondere mehrfach größere, Materialstärke als im Faltabschnitt hat.

Bei der Befüllöffnung kann es sich insbesondere um die bereits beschriebene Befüllöffnung handeln. Somit kann eine ausreichende Stabilität des Schaltelements im Bereich der Befüllöffnung bereitgestellt werden.

Bei einer vorteilhaften Ausgestaltung kann vorgesehen sein, dass der Pilotventilsitz des Schaltelements aus einer weichen Komponente ausgebildet ist.

Bei der Komponente handelt es sich um die oder eine weichere Komponente der bereits beschriebenen Komponenten des Schaltelements. Somit kann der Widerstand des Schaltelements gegen den anliegenden Ventilstößel reduziert und/oder genauer festgelegt sein. Die Abdichtung des Aufsetzbereichs des Ventilstößels gegen den Pilotventilsitz des Schaltelements kann somit optimiert werden.

Alternativ oder zusätzlich kann vorgesehen sein, dass Verstärkungsstrukturen des Schaltelements aus einer harten Komponente ausgebildet sind.

Bei der Komponente handelt es sich um die oder eine härtere Komponente der bereits beschriebenen Komponenten des Schaltelements. Somit kann das Schaltelement härtere und/oder verstärkte Bereiche aufweisen, die einen größeren Widerstand gegen den anliegenden Ventilstößel ausüben. Beispielsweise kann ein weicherer Pilotventilsitz durch die härtere Komponente an seiner Position gehalten werden, während der Pilotventilsitz selbst durch den anliegenden Ventilstößel verformt werden kann. Somit kann die Abdichtung des Aufsetzbereichs des Ventilstößels gegen den Pilotventilsitz des Schaltelements optimiert werden.

Bei einer vorteilhaften Ausgestaltung kann vorgesehen sein, dass eine Push-Push-Mechanik zur Verstellung des Ventilstößels zwischen seiner Schließstellung und seiner Offenstellung vorgesehen ist.

Somit ist ein besonderer Bedienkomfort und eine einfache Bedienbarkeit des Ventils für den Benutzer des Ventils realisierbar.

Alternativ oder zusätzlich sind zur Lösung der genannten Aufgabe erfindungsgemäß die Merkmale des nebengeordneten, auf eine Sanitärarmatur gerichteten Anspruchs vorgesehen. Insbesondere wird somit zur Lösung der genannten Aufgabe bei ... der eingangs beschriebenen Art erfindungsgemäß vorgeschlagen, dass die Sanitärarmatur ein erfindungsgemäßes Sanitärventil aufweist.

Somit können die genannten Vorteile erfindungsgemäßer Sanitärventilen bei Sanitärarmaturen genutzt werden.

Die Erfindung wird nun anhand eines Ausführungsbeispiels näher beschrieben, ist jedoch nicht auf das Ausführungsbeispiel beschränkt. Weitere Ausführungsbeispiele ergeben sich durch Kombination der Merkmale einzelner oder mehrerer Ansprüche untereinander und/oder mit einzelnen oder mehreren Merkmalen des Ausführungsbeispiels.

Es zeigen:

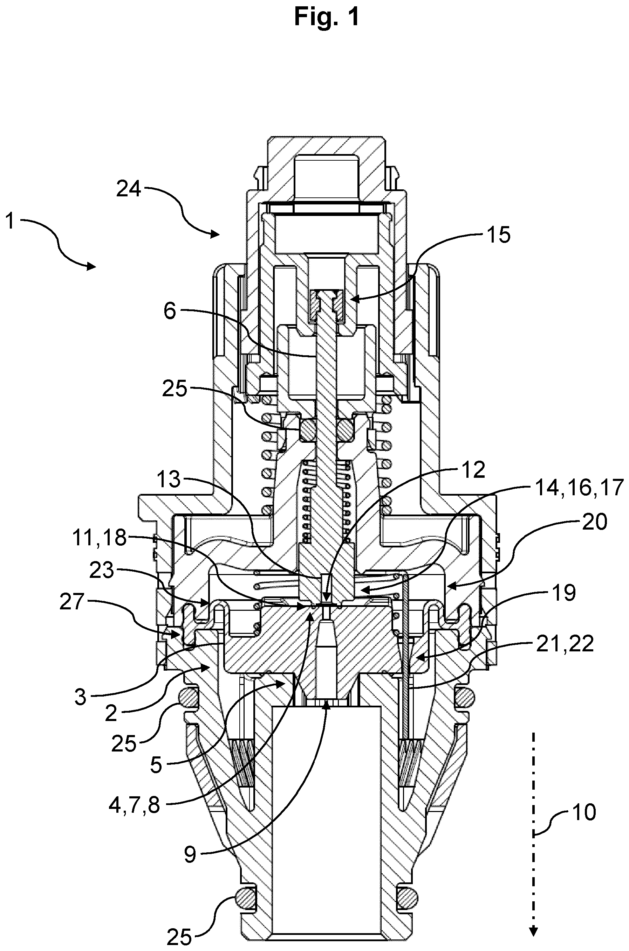

- Fig. 1: ein erfindungsgemäßes Sanitärventil in einer seitlichen Schnittansicht,
- Fig. 2: das Schaltelement des Sanitärventils aus Figur 1 mit zugehörigem Ventilstößel und zugehöriger Feder in einer seitlichen Schnittansicht,
- Fig. 3: das Schaltelement des Sanitärventils aus Figur 1 in einer perspektivischen Ansicht,
- Fig. 4: das Schaltelement des Sanitärventils aus Figur 1 in einer Ansicht von unten,
- Fig. 5: das Schaltelement des Sanitärventils aus Figur 1 in einer Ansicht von oben,
- Fig. 6: das Schaltelement des Sanitärventils aus Figur 1 in einer Schnittansicht,
- Fig. 7: die Anordnung aus Figur 2 zusammen mit zwei Gehäuseteilen in einer Schnittansicht.
Die Figuren zeigen jeweils dasselbe Ausführungsbeispiel und werden daher zusammenhängend beschrieben. Mit Bezugszeichen versehene Elemente sind zumindest in einer Figur bezeichnet, so dass sich deren Identität aus einer Zusammenschau der Figuren ergeben kann.

Das gezeigte Ausführungsbeispiel ist ein erfindungsgemäßes Sanitärventil 1 mit einem Hauptventil 2, das ein bewegliches Schaltelement 3 aufweist, und mit einem Pilotventil 4, mit welchem das Hauptventil 2 zwischen einer Schließstellung, die in den Figuren gezeigt ist und in der das Schaltelement 3 auf einem Ventilsitz 5 des Hauptventils 2 dicht aufliegt, und einer nicht gezeigten Offenstellung ansteuerbar ist, in der das Schaltelement 3 zu dem Ventilsitz 5 beabstandet ist, wobei das Pilotventil 4 mit einem Ventilstößel 6 zwischen einer in den Figuren gezeigten Schließstellung und einer nicht gezeigten Offenstellung ansteuerbar ist, dadurch gekennzeichnet, dass der Ventilstößel 6 in seiner Schließstellung mit einem Aufsetzbereich 7 auf einem Pilotventilsitz 8 des Schaltelements 3 aufsitzt, wobei zumindest der Aufsetzbereich 7 eine größere Härte als der Pilotventilsitz 8 aufweist. Das Sanitärventil weist außerdem eine Reihe von vorzugsweise als O-Ring ausgeführten Dichtungen 25 auf. Soweit das Schaltelement 3 in dem Ausführungsbeispiel unverformt dargestellt ist, jedoch beispielsweise mit dem Ventilsitz 5 oder dem Aufsetzbereich 7 des Ventilstößels 6 überlappt, ist eine entsprechende Verformung des Schaltelements 3 in der Realität gegeben.

Der Ventilstößel 6 verschließt in seiner Schließstellung mit seinem Aufsetzbereich 7 eine Entlastungsöffnung 9 des Schaltelements 3, wobei die Entlastungsöffnung 9 an ihrem dem Ventilstößel 6 zugewandten Ende einen geringsten Durchmesser aufweist und sich in Schließrichtung 10 des Schaltelements 3 erweitert.

Der Aufsetzbereich 7 des Ventilstößels 6 ist von einem ringförmigen Fortsatz 11 des Ventilstößels 6 gebildet. Der Aufsetzbereich 7 des Ventilstößels 6 umschließt eine Öffnung 12 in ein Inneres 13 des Ventilstößels 6. Der Ventilstößel 6 ist aus einem homogenen Material, nämlich einem Kunststoff, gefertigt.

Der Ventilstößel 6 weist an seinem den Aufsetzbereich 7 bildenden Ende 14 eine nicht dargestellte, umlaufende Werkzeugtrennlinie auf. Der Ventilstößel 6 weist zumindest an seinem dem Aufsetzbereich 7 abgewandten Ende 15 eine nicht dargestellte, axial verlaufende Werkzeugtrennlinie auf. Der Ventilstößel 6 ist somit in einem Spritzgussverfahren herstellbar.

Der Aufsetzbereich 7 des Ventilstößels 6 ist an einem mit einer Durchmesservergrößerung 16 versehenen, freien Ende 17 des Ventilstößels 6 ausgebildet. Das freie Ende 17 ist im Ausführungsbeispiel auch das den Aufsetzbereich 7 bildende Ende 14. Der Aufsetzbereich 7 ist als ein umlaufender Kragen 18 ausgebildet, und zwar angeformt.

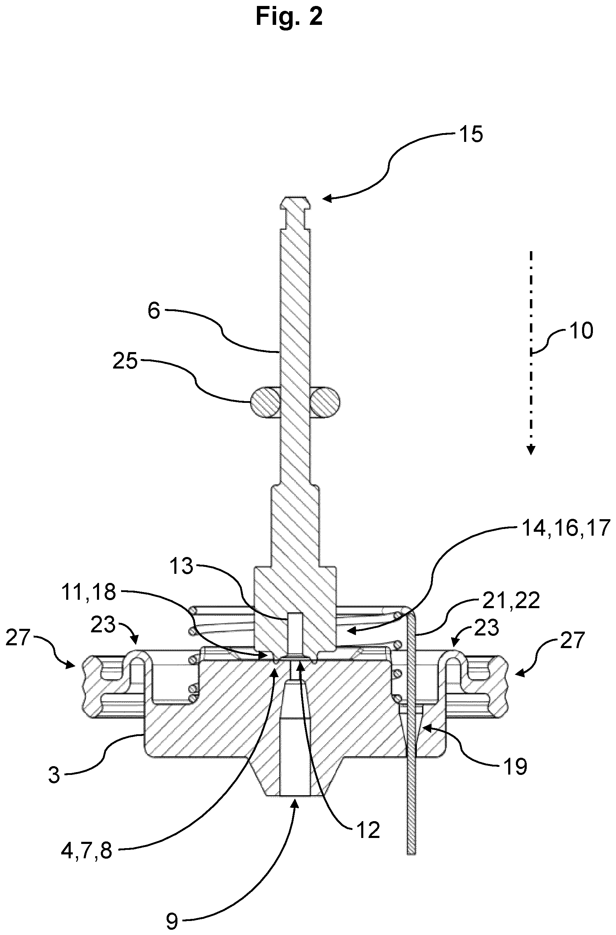

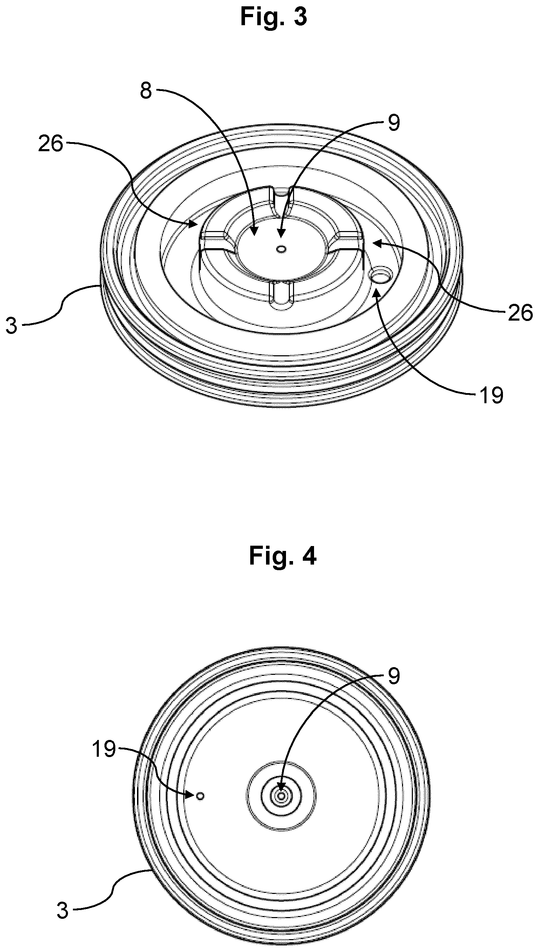

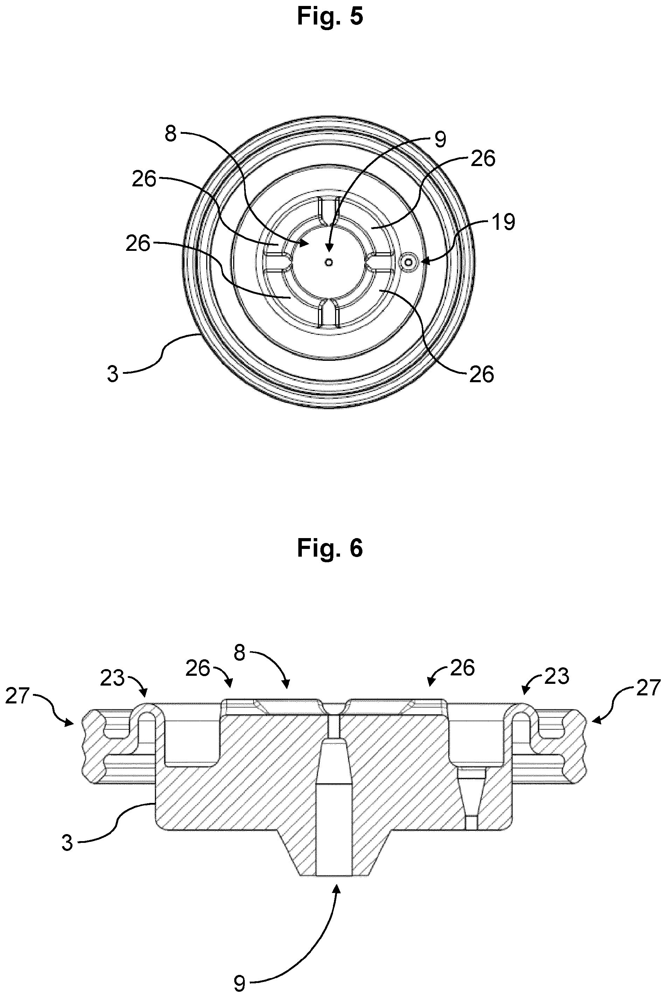

Das Schaltelement 3 ist einstückig und aus einem homogenen Werkstoff, nämlich aus Gummi, ausgebildet. Das Schaltelement 3 ist in einem nicht gezeigten Ausführungsbeispiel aus wenigstens zwei stoffschlüssig miteinander verbundenen Komponenten ausgebildet. Das Schaltelement 3 ist außerhalb des Pilotventilsitzes 8 von einer Befüllöffnung 19 durchsetzt, mittels welcher ein pilotventilseitig befindlicher Bereich 20 des Sanitärventils 1 bei in Schließstellung befindlichem Hauptventil 2 befüllbar ist. Hierbei ist ein Durchmesser der Befüllöffnung 19 durch ein Reduzierelement 21, nämlich durch eine Feder 22, verengt. Dies ist insbesondere in Figur 2 sichtbar. Das Schaltelement 3 ist im Bereich der Befüllöffnung 19 durch Verstärkungsstrukturen 26 verstärkt. Die Verstärkungsstrukturen 26 sind insbesondere in den Figuren 3, 5 und 6 erkennbar. Das Schaltelement 3 kann im Bereich der Befüllöffnung 19 durch eine harte Komponente verstärkt sein, insbesondere wobei die harte Komponente die Verstärkungsstrukturen 26 bildet.

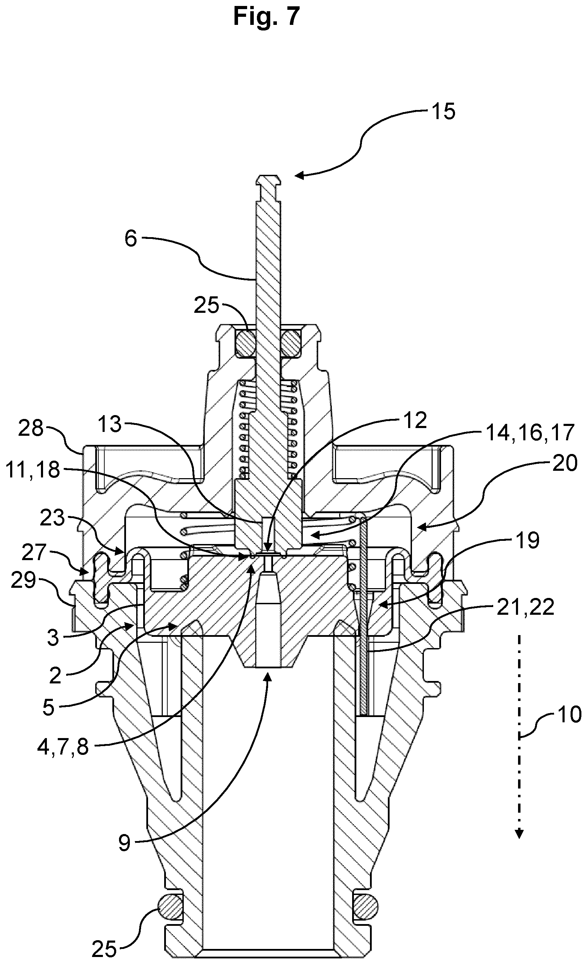

Das Schaltelement 3 weist einen ringförmig umlaufenden Faltabschnitt 23 auf, der eine Schaltbewegung zwischen der Offenstellung und der Schließstellung des Hauptventils 2 ermöglicht. Das Schaltelement 3 weist außerdem einen Befestigungsabschnitt 27 auf, der ringförmig umlaufend ausgebildet ist. Mit dem Befestigungsabschnitt 27 kann das Schaltelement 3 beispielsweise zwischen Gehäuseteilen 28, 29 des Sanitärventils 1 befestigt sein, wie insbesondere in Figur 7 erkennbar ist. Der Befestigungsabschnitt 27 weist zur sicheren Befestigung eine mehrfach größere Materialstärke als der Faltabschnitt 23 auf. Das Schaltelement 3 weist in einem Bereich des Pilotventilsitzes 8 eine größere, sogar mehrfach größere, Materialstärke auf als im Faltabschnitt 23. Das Schaltelement 3 weist an der Befüllöffnung 19 eine geringere, sogar mehrfach geringere, Materialstärke als im Bereich des Pilotventilsitzes 8 auf und hat eine größere, sogar mehrfach größere, Materialstärke als im Faltabschnitt 23. In einem nicht gezeigten Ausführungsbeispiel sind der Pilotventilsitz 8 des Schaltelements 3 aus einer weichen Komponente und Verstärkungsstrukturen 26 des Schaltelements 3 aus einer harten Komponente ausgebildet.

Ferner ist eine Push-Push-Mechanik 24 zur Verstellung des Ventilstößels 6 zwischen seiner Schließstellung und seiner Offenstellung vorgesehen.

Das Sanitärventil 1 kann beispielsweise Teil einer nicht gezeigten Sanitärarmatur sein, in diese eingebaut und/oder mit dieser verwendet werden.

Es wird somit ein Sanitärventil 1 vorgeschlagen, mit einem Hauptventil 2, das ein bewegliches Schaltelement 3 aufweist, und mit einem Pilotventil 4, mit welchem das Hauptventil 2 zwischen einer Schließstellung, in der das Schaltelement 3 auf einem Ventilsitz 5 des Hauptventils 2 dicht aufliegt, und einer Offenstellung ansteuerbar ist, in der das Schaltelement 3 zu dem Ventilsitz 5 beabstandet ist, wobei das Pilotventil 4 mit einem Ventilstößel 6 zwischen einer Schließstellung und einer Offenstellung ansteuerbar ist, wobei der Ventilstößel 6 in seiner Schließstellung mit einem Aufsetzbereich 7 auf einem Pilotventilsitz 8 des Schaltelements 3 aufsitzt, wobei zumindest der Aufsetzbereich 7 eine größere Härte als der Pilotventilsitz 8 aufweist. Ferner wird eine Sanitärarmatur mit einem erfindungsgemäßen Sanitärventil 1 vorgeschlagen.

### Bezugszeichenliste

- 1: Sanitärventil
- 2: Hauptventil
- 3: Schaltelement
- 4: Pilotventil
- 5: Ventilsitz
- 6: Ventilstößel
- 7: Aufsetzbereich
- 8: Pilotventilsitz
- 9: Entlastungsöffnung
- 10: Schließrichtung
- 11: Fortsatz
- 12: Öffnung
- 13: Inneres
- 14: Ende
- 15: Ende
- 16: Durchmesservergrößerung
- 17: freies Ende
- 18: Kragen
- 19: Befüllöffnung
- 20: Bereich
- 21: Reduzierelement
- 22: Feder
- 23: Faltabschnitt
- 24: Push-Push-Mechanik
- 25: Dichtung
- 26: Verstärkungsstruktur
- 27: Befestigungsabschnitt

## Patentansprüche

1. Sanitärventil (1) mit einem Hauptventil (2), das ein bewegliches Schaltelement (3) aufweist, und mit einem Pilotventil (4), mit welchem das Hauptventil (2) zwischen einer Schließstellung, in der das Schaltelement (3) auf einem Ventilsitz (5) des Hauptventils (2) dicht aufliegt, und einer Offenstellung ansteuerbar ist, in der das Schaltelement (3) zu dem Ventilsitz (5) beabstandet ist, wobei das Pilotventil (4) mit einem Ventilstößel (6) zwischen einer Schließstellung und einer Offenstellung ansteuerbar ist, **dadurch gekennzeichnet, dass** der Ventilstößel (6) in seiner Schließstellung mit einem Aufsetzbereich (7) auf einem Pilotventilsitz (8) des Schaltelements (3) aufsitzt, wobei zumindest der Aufsetzbereich (7) eine größere Härte als der Pilotventilsitz (8) aufweist.

2. Sanitärventil (1) nach dem vorangehenden Anspruch, **dadurch gekennzeichnet, dass** der Ventilstößel (6) in seiner Schließstellung mit seinem Aufsetzbereich (7) eine Entlastungsöffnung (9) des Schaltelements (3) verschließt, insbesondere wobei die Entlastungsöffnung (9) an ihrem dem Ventilstößel (6) zugewandten Ende (14) einen geringsten Durchmesser aufweist und/oder sich in Schließrichtung (10) des Schaltelements (3) erweitert.

3. Sanitärventil (1) nach einem der vorangehenden Ansprüche, **dadurch gekennzeichnet, dass** der Aufsetzbereich (7) des Ventilstößels (6) von einem vorzugsweise ringförmigen Fortsatz (11) des Ventilstößels (6) gebildet ist und/oder dass der Aufsetzbereich (7) des Ventilstößels (6) eine Öffnung (12) in ein Inneres (13) des Ventilstößels (6) umschließt.

4. Sanitärventil (1) nach einem der vorangehenden Ansprüche, **dadurch gekennzeichnet, dass** der Ventilstößel (6) aus einem homogenen Material, insbesondere einem Kunststoff, gefertigt ist.

5. Sanitärventil (1) nach einem der vorangehenden Ansprüche, **dadurch gekennzeichnet, dass** der Ventilstößel (6) an seinem den Aufsetzbereich (7) bildenden Ende (14) eine umlaufende Werkzeugtrennlinie aufweist und/oder dass der Ventilstößel (6) zumindest an seinem dem Aufsetzbereich (7) abgewandten Ende (15) eine axial verlaufende Werkzeugtrennlinie aufweist.

6. Sanitärventil (1) nach einem der vorangehenden Ansprüche, **dadurch gekennzeichnet, dass** der Aufsetzbereich (7) des Ventilstößels (6) an einem, insbesondere mit einer Durchmesservergrößerung (16) versehenen, freien Ende (17) des Ventilstößels (6) ausgebildet ist.

7. Sanitärventil (1) nach einem der vorangehenden Ansprüche, **dadurch gekennzeichnet, dass** der Aufsetzbereich (7) als ein vorzugsweise umlaufender Kragen (18) ausgebildet, insbesondere angeformt ist.

8. Sanitärventil (1) nach einem der vorangehenden Ansprüche, **dadurch gekennzeichnet, dass** das Schaltelement (3) einstückig und/oder aus einem homogenen Werkstoff, insbesondere aus Gummi, ausgebildet ist.

9. Sanitärventil (1) nach einem der vorangehenden Ansprüche, **dadurch gekennzeichnet, dass** das Schaltelement (3) aus wenigstens zwei vorzugsweise stoffschlüssig miteinander verbundenen Komponenten ausgebildet ist.

10. Sanitärventil (1) nach einem der vorangehenden Ansprüche, **dadurch gekennzeichnet, dass** das Schaltelement (3) vorzugsweise außerhalb des Pilotventilsitzes (8) von einer Befüllöffnung (19) durchsetzt ist, mittels welcher ein pilotventilseitig befindlicher Bereich (20) des Sanitärventils (1) bei in Schließstellung befindlichem Hauptventil (2) befüllbar ist, insbesondere wobei ein Durchmesser der Befüllöffnung (19) durch ein Reduzierelement (21), vorzugsweise eine Feder (22), verengt ist.

11. Sanitärventil (1) nach einem der vorangehenden Ansprüche, **dadurch gekennzeichnet, dass** das Schaltelement (3) im Bereich der Befüllöffnung (19) durch Verstärkungsstrukturen (26) und/oder eine harte Komponente verstärkt ist.

12. Sanitärventil (1) nach einem der vorangehenden Ansprüche, **dadurch gekennzeichnet, dass** das Schaltelement (3) einen vorzugsweise ringförmig umlaufenden Faltabschnitt (23) aufweist, der eine Schaltbewegung zwischen der Offenstellung und der Schließstellung des Hauptventils (2) ermöglicht, insbesondere wobei das Schaltelement (3) in einem Bereich des Pilotventilsitzes (8) eine größere, insbesondere mehrfach größere, Materialstärke aufweist als im Faltabschnitt (23) und/oder wobei das Schaltelement (3) an einer Befüllöffnung (19) eine geringere, insbesondere mehrfach geringere, Materialstärke als im Bereich des Pilotventilsitzes (8) und/oder eine größere, insbesondere mehrfach größere, Materialstärke als im Faltabschnitt (23) hat.

13. Sanitärventil (1) nach einem der vorangehenden Ansprüche, **dadurch gekennzeichnet, dass** der Pilotventilsitz (8) des Schaltelements (3) aus einer weichen Komponente und/oder Verstärkungsstrukturen (26) des Schaltelements (3) aus einer harten Komponente ausgebildet sind.

14. Sanitärventil (1) nach einem der vorangehenden Ansprüche, **dadurch gekennzeichnet, dass** eine Push-Push-Mechanik (24) zur Verstellung des Ventilstößels (6) zwischen seiner Schließstellung und seiner Offenstellung vorgesehen ist.

15. Sanitärarmatur mit einem Sanitärventil (1) nach einem der vorangehenden Ansprüche.
